# EUROPEAN PATENT APPLICATION

(11) **EP 4 252 923 A1**
(43) Date of publication of application: **04.10.2023**
(21) Application number: 21895965.8
(22) Date of filing: 17.05.2021
(51) Int. Cl.: B05C 11/10, B05C 11/02, B05C 17/12

(54) **INDUSTRIAL THERMOPLASTIC ADHESIVE APPLICATOR**

(30) Priority: 26.11.2020 BR 102020024149
(71) Applicant: Souza, Silvano, Baptista, De, 93542-000 Novo Hamburgo - RS (BR)
(72) Inventor: Souza, Silvano, Baptista, De, 93542-000 Novo Hamburgo - RS (BR)
(74) Representative: Torner, Juncosa I Associats, SL
(86) International application number: PCT/BR2021/050206
(87) International publication number: WO 2022/109689

(57) **Abstract**

The present application for patent of invention refers to an industrial thermoplastic adhesive applicator, having portable and hand-held characteristics, being essentially comprised of a central heating and cooling control unit (1) of the hand-held applicator *per se* (3), which is housed in said heating and cooling unit (1), at least one hand-held applicator (3) being envisaged in each said unit. The invention pertains to the segment of the industry of thermoplastic adhesives, particularly for leather, rubber, fabrics, synthetic laminates, paper and cardboard, wood, metal and the like. The present invention refers to the constructive form of a hand-held applicator of thermoplastic adhesives, portable, cordless, the design of which was developed to handle like a pencil or marker or writing pen, with a broad degree of freedom of movement when applying adhesives.

## Description

### SUMMARY

The present application for patent of invention refers to an industrial thermoplastic adhesive applicator, having portable and hand-held characteristics, being essentially comprised of a central heating and cooling control unit of the hand-held applicator itself, which is housed in said heating and cooling unit, and at least one hand-held applicator being envisaged in each said unit.

### FIELD OF APPLICATION

The invention pertains to the segment of the industry of thermoplastic adhesives, particularly for leather, rubber, fabrics, synthetic laminates, paper and cardboard, wood, metal and the like.

Particularly, its use is generic and serves to apply thermoplastic adhesive in the form of a trail with smooth design, texturized, high and low relief, relating to the design of the applicator nozzle. On the substrate to be bonded, the application may be linear or curved in design, point-to-point or continuous.

The technology according to the invention is applicable on leather, synthetics, paper, fabrics, wood, metal etc., according to the characteristics of the adhesive to be used.

The invention also substitutes double-sided adhesive tape and, for this reason, can be used in applications on just one of the two substrates to be bonded.

Its application can be in manufacturing in the industry of clothing, bags, footwear, wallets, handicraft, packaging, furniture, that is, where there is definitive fastening or where there is prior setting of positioning, with subsequent sequence of other definitive fastening forms, such as stitching or riveting.

The resources and solutions in technology, operational security, materials used and ergonomics of the product, suggest that it is used in industrial applications, but allows for diverse generic use, such as household, school, laboratories etc., by means of optional exchangeable nozzles.

### STATE OF THE ART

There is no known existence of a portable hand-held industrial thermoplastic adhesive applicator product with the technical characteristics, constructive form and industrial design as presented herein, when compared relative and the technology, solutions, ergonomics and industrial sectors for which it may be intended.

Although products with certain partially similar characteristics are known, they do not fall within the claimed scope:
- Thermally-heated applicator for use in hair removal and human aesthetics;
- Thermoplastic adhesive applicator apparatus produced by the company *Morbach,* located in Novo Hamburgo, RS: This apparatus is for applying thermoplastic adhesive, horizontal trolley type with adhesive horizontal container, heated by electrical resistance, connected to the electric control unit by electrical supply wire and sensing wire, with handle or knob in horizontal position, with applicator nozzle;
- Gun-like thermoplastic adhesive applicator apparatus with trigger which pushes the solid adhesive stick against a nozzle heated, originating from China.

Document CA1067870, published on December 11, 1979, describes a hand-held gun-type applicator provided for distributing thermofuse adhesive for use in an adhesive distributor system. A hand-held gun includes a new load valve structure adapted to interlock with the new feed valve structure mounted on the hotmelt adhesive source in order to carry out the transfer of a hotmelt adhesive load in molten form from the source to the storage chamber of the weapon. The adhesive is pressurized within the storage chamber of the weapon by a new pressure device, at least partially embedded within the storage chamber, providing the driving force to cause discharge of the molten adhesive from the nozzle of the weapon in response to manual activation of the gun trigger.

Document CN210100571, published on February 21, 2020, describes a circular side glue-inlet-tip-type hot chamber device. The device comprises a cooling mechanism and a hydraulic rod, a base is mounted on one side of the cooling mechanism; a nozzle is disposed on the base; wherein a main flow chamber is mounted over the base; protection mechanisms are mounted on the left side and on the right side of the main flow chamber; a heating tube is disposed in the main flow chamber, a flow-guide chamber is disposed in the heating tube, a fill opening is formed in the upper portion of the main flow chamber, a through hole is formed in the fill opening, an ejector block is disposed above the through hole, a pressure rod is disposed above the ejector block and a hydraulic rod is located above the pressure rod. The round-side hot-glue inlet-type hot chamber device is provided with the protection mechanism, the fastening structure limits the position of the stainless steel network, the connecting rod can effectively separate the stainless steel network from the main flow chamber and, therefore, a user is separated from the main flow chamber at a certain distance, the main flow chamber is prevented from scalding the user and good protection can be effectively provided to the user.

Document MU8500114 is comprised of a heating reservoir with hotmelt adhesive load capacity in the form of granules or cubes that are smaller than the reservoir mouth, with a strategically-positioned cartridge resistance responsible for heating the reservoir at temperatures that interfere with the physical state of the adhesive, and the temperature of the reservoir is controlled through a blade-type thermostat, and the adhesive supply mouth is situated in the upper part of the reservoir, endowed with a sealing cover of the recipient, containing a rest support, and the dosing nozzle is located at the front part of the reservoir, responsible for applying the adhesive on the surface to be glued, in the lower part of the reservoir there is a cylinder where a piston works, taking the melted adhesive to the dosing nozzle, this piston is activated by a rod connected to the drive trigger, where upon being pressed, the trigger through the rod pushes the piston forwards taking the adhesive to the dosing nozzle, applying the adhesive on the desired surface, when the trigger returns, the piston returns and by suction fills the cylinder of the reservoir again, ending the working cycle.

In short, all the presented state of the art documents are, firstly, complex in construction and, similarly, none of them describes, with constructive simplicity, a heating and cooling control unit of the at least one applicator coupled thereto, which always remains at the ideal temperature.

With regards to the thermally-heated wax applicator for use in hair removal and human aesthetics, that is, its segment is that of health and aesthetics. This product does not attain the temperature required to soften the thermoplastic adhesives.

However, if it did, its handling would be unlikely, as the handle of these products does not have suitable insulation, nor forced cooling that could enable safe handling.

The trolley-type thermoplastic adhesive applicator apparatus is designed for the sector of industrial application, but with limitation in the degree of freedom of movement in the application, being ergonomically designed exclusively for horizontal use.

The trolley-type applicator uses an electrical heating resistance next to the body of the applicator, and accordingly contains electric feed wiring for the heating resistance and electric wiring with temperature sensor.

The trolley-type thermoplastic applicator was developed for horizontal applications whose thermoplastic reservoir capacity prioritizes greater volume, and not flexibility of handling.

In other words, the trolley-type applicator has in its construction architecture the applicator nozzle fixed on the reservoir base, followed by the thermoplastic reservoir and lastly the handle, which surrounds the electric feed cable, positioned horizontally. That is, it is a product whose handling and use has a degree of freedom of movement limited to horizontal use and without ergonomics for portable handling.

The gun-type applicator was developed with the purpose of injecting adhesive drops on what you wish to bond. There is no way of obtaining continuous and uniform bonding on flat surfaces.

Further, the gun-type thermoplastic adhesive applicator was developed exclusively for one type or class of solid adhesive, with specific hardness and consistency.

The gun-type thermoplastic adhesive applicator was developed for just one type of adhesive stick with pre-stipulated dimensions and adhesives of other physical forms cannot be used, such as granulated adhesive or sachets.

The gun-type thermoplastic adhesive applicator was developed from a heated, funnel-shaped nozzle, where the thermoplastic stick is compressed, melted and extruded by action of the user, by compressing the gun trigger. Said applicator is heated from a compound ceramic tablet, of the piezoelectric type, which upon receiving the electricity directly from the power socket, through a feed cable, begins to heat and conduct heat to said funnel.

The set of electrical components of this gun boils down to a single-phase pin socket, with no earthing, a ceramic tablet and a two-conductor feed cable, the ends of which are connected to the pin socket and the other directly in the ceramic tablet.

This electric circuit installed as a heating system does not contemplate operational safety, as it does not include master switch, fuses, earthing or any type of temperature control. Therefore, it is not suitable for any type of use, be it industrial, professional, personal, school, etc.

### ADVANTAGES OF THE INVENTION

The present invention refers to a constructive form of a hand-held, portable, cordless applicator of thermoplastic adhesives, designed to be handled like a pencil or marker or writing pen, with a broad degree of freedom of movement when applying adhesives.

Another advantage is the fact that the applicator is light and ergonomic, easy to handle due to its reduced size and the space inside the handle or body, acts as fusion reservoir for the adhesive to be applied by the nozzle.

Further, the portable system developed offers maximum safety against electric shocks, poor contact, sparks or short-circuit in the applicator, because it is portable and has no electric wire for heating. The heating is generated and replaced in the applicator, through the base unit, where the applicator is at rest, collecting the thermal energy and cooling the cover of the cable after intermittent use. The base unit includes electricity installation items such as master disconnector switch, overload fuse, on/off service switch, signaling lamp, dual-cover power cable and digital temperature controller.

Although the applicator has adhesive heated to a high temperature in its reservoir, the outer cover of the handle is kept at a safe temperature to handle, due to the thermal insulation system being made of material with a low heat conduction coefficient and by the design of its fins being suitable for air circulation-induced cooling.

Thermoplastic application technology comprises exchangeable applicator nozzles developed for each need, from low and high relief widths and designs. The respective drawings determine the degree of flexibility or bonding adhesion.

The set of solutions developed in this project translates into a product of great utility for industrial production, where the agility, simplicity and precision in the application of thermoplastic adhesives results in savings in operating costs.

Besides the obvious advantages and benefits from the description above, others can be listed, namely:
- Portable and cordless applicator;
- Light and ergonomic handling as writing pen;
- Broad degree of freedom of movement when applying the adhesive;
- Grip handle just like that of a writing pen;
- Applicator cradle base with thermally-controlled heating system;
- Electromagnetic and electrical induction heating system;
- Heating or cooling system induced from the cover of the applicator;
- The inside of the handle or body acts as fusion reservoir of the adhesive to be applied by the nozzle;
- Applicator unit system free of electric wires, safe and durable;
- Exchangeable applicator nozzles developed for each application requirement;
- Applicators with thermal energy accumulator for greater active autonomy and speed in recharge.

In best summary form of the invention, the following is highlighted:
- The applicator (applicator pen) has an anatomical shape and does not need wires, being portable. It can be used manually or coupled to a CNC machine, for example;
- The applicator (pen) does not require auxiliary devices for heating the adhesive, in the body of the applicator (pen) itself. It uses heat induction to guarantee the softening of the adhesive and so that it stays in application point (liquid) for sufficient time for industrial use;
- The fact that it does not require wires or other connections to the central heating control unit enables total freedom of movement, as well as assuring the safety of the user, who does not come into direct contact with wires, electrical resistances or other elements;
- There is no need for auxiliary devices in or outside the body of the applicator to promote the pumping of the adhesive upon application, using for such the dynamics produced by the constructive form and the application movement itself;
- The applicator (pen) has a constructive so that when at rest, it promotes the staunching of the adhesive, and when in motion, it promotes the pumping of the adhesive, resulting in uniform and continuous application;
- The handle of the applicator (pen) has a constructive form suitable for promoting the outer cooling of the handle, guaranteeing comfort for the operator, keeping the temperature of the adhesive inside the handle by the thermal insulation employed.

### DESCRIPTION OF THE INVENTION

The invention comprises a central heating and cooling control unit of the applicator, comprising a hand-held applicator allocated in said central heating control unit, and at least one applicator is applied to the unit, when at rest, and two, three or more applicators can be used simultaneously.

For clarification, it is appropriate to explain that resistant thermoplastic adhesives, used chiefly in industry, soften (liquefy), at temperatures above 100 degrees Celsius, depending on the compound. The vast majority requires temperatures over 120 degrees Celsius and some may require temperatures close to 200 degrees Celsius. Therefore, inside the handle of the applicator, the adhesive must reach these temperatures. As such, the central heating control unit needs to generate this temperature and transmit to the applicator, which will retransmit to the adhesive, on its inside. It is also necessary for the applicator to keep this heat on its inside for a certain period, equal to or greater than that required for the adhesive to be dispensed or applied. At the same time, the outer surface of the handle needs to be kept cooled, making human handling safe and comfortable during use.

Technically, the body of the applicator has an ergonomic design developed to manually apply the adhesive in a similar way to a writing or marker pen and is comprised of a cover of the applicator handle, responsible for the thermal insulation of the handle, in the area of contact with the operator's hand. The inside of the applicator handle has the function of reservoir where melting of the adhesive to be applied occurs.

The thermoplastic adhesive is applied by dynamic rotary nozzles, fixed to the handle at the lower end. The smear of adhesive applied depicts the design and size of the applicator nozzle.

The applicator is heated in a central heating control unit, where the applicator is at rest, collecting the thermal energy in the heated support, with the thermal energy accumulator of the applicator and cooling the cover of the body, through active cooling induced by air circulation (9).

The heating system of the applicator is carried out by electromagnetic induction or electrical resistance, depending on the application for which it is intended.

The system and design of the applicator is "cordless", that is, portable cordless.

The architecture of the applicator comprises the combination of spare and exchangeable parts, which perform physical functional characteristics when working jointly.

In the application, the applicator transfers the adhesive to the surface of materials, with the physical form pre-determined by the nozzle of the applicator, the dimensions of the area applied are uniform, with smooth design or texturized, whereby the consumption and yield of the adhesive can be measured and balanced, as required.

In the central heating control unit, where the housings for rest and applicator heating are located, electric circuitry, heat controllers with sensors, electric master switch, on/off heating switch, signals and electrical power cables are installed.

### OBJECTIVES OF THE INVENTION

It is an objective of invention to propose a portable applicator of thermoplastic adhesives, developed to apply thermally-activated adhesives by way of rotary, spherical or injection nozzles, drop by drop onto surfaces of materials to be bonded, such as leather, rubber, fabrics, synthetic laminates, paper and cardboard, wood, metal and the like.

Another objective of the invention is to provide an application free of electric wiring, where the handling of the applicator has a degree of freedom of movement and can be used in work performed on tabletops, on conveyor belts, product packaging lines or any other process that is compatible with hotmelt thermoplastic adhesives.

A further objective of the invention is to provide a portable thermal tool that can be handled just like the grip of a marker pen, with a broad degree of freedom of movement.

Also in the list of objectives is the production of rotary applicator nozzles, apply or transfer the adhesive on each surface, having a physical form similar to a pen, of uniform width pursuant to the measurement of the nozzle, having a smooth or texturized thickness according to the model or design of the surface of each applicator nozzle.

A final objective of the invention is to provide an applicator with a broad freedom of movements and to facilitate the manual application of this type of thermal adhesive, composed of 100% of solid adhesives and free of unhealthy solvents, with precision, at a desired location. When compared to conventional paintbrushes, in industrial use, the advantages are gained in processes and consumption savings, with flexibility of operating sequence, with greater productivity per work time or "per pickup", greater precision and uniformity in applying the adhesive, greater savings in the consumption of adhesives by being able to use applicator nozzles having different width and thickness. The resources and solutions in technology, operating safety, materials and ergonomics of the product, suggest that it be used in industrial environments, but enables generic use, such as professional, household, school etc., (by way of optional exchangeable nozzles).

### DESCRIPTION OF THE DRAWINGS

The invention will now be described in terms of a preferred embodiment, and for improved understanding, references will be made to the accompanying drawings, wherein the following is represented:
Fig. 1: Bottom and top perspective views of the applicator;
Fig. 2: Perspective view of the applicator in use, forming straight (R1) and curved (S) images simply by handling the pen;
Fig. 3: Perspective top view of the applicator, with blown-up detail of the application tip;
Fig. 4: Perspective view of the temperature and heating unit, exemplifying the use of two applicators, one being coupled to its housing and the other outside the unit;
Fig. 5: Side view of the applicator nozzle with A-A cut-off indication;
Fig. 5A: Side view of the A-A section of the preceding figure, with the applicator applied to the heating unit;
Fig. 6: Perspective bottom view of the applicator, with the applicator tip blown up;

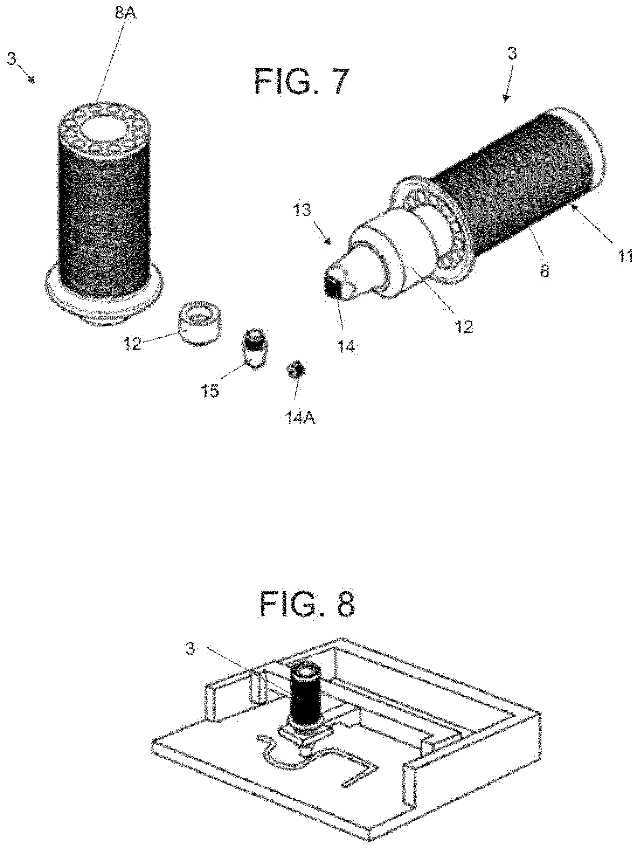

Fig. 7: Perspective view of the applicator, highlighting the knob and the other components;
Fig. 7A: Perspective view of the applicator of the preceding figure mounted;
Fig. 8: Perspective view of the applicator in use;

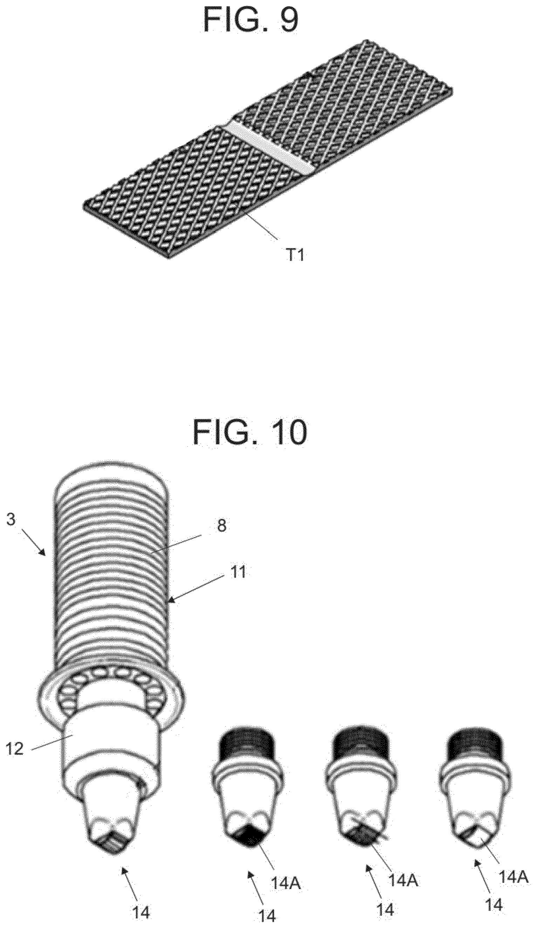

Fig. 9: Exemplifies design made by the applicator tip, in texturized (T1) form;
Fig. 10: Shows exchangeable applicator nozzles in perspective;
Fig. 11: Shows the applicator roll of bipartite adhesive and composed of mirrored parts;
FIG. 11A: Shows the tip in cutaway, with the roll forming the texturization;

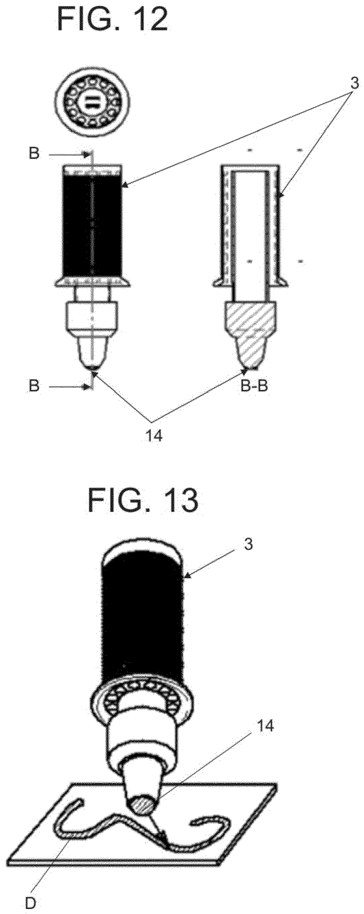

Fig. 12: Top and side view of an applicator with B-B cutaway line and B-B section;
Fig. 13: Perspective view of the applicator in use, forming a design (D) and showing one type of applicator tip;
Fig. 14: Shows the electronic heating circuit of the hotmelt applicator pens, which can be done through generating sources such as electrical resistance RES1;
Fig. 15: Shows the electronic heating circuit of the hotmelt applicator pens, which can be done through electromagnetic inductance GI1 and L1 installed in the central heating control unit;
Fig. 16: Shows the electronic heating circuit of the hotmelt applicator pens, by bi-metal thermo-regulator or with gas or thermostat-like temperature sensor.

### DETAILED DESCRIPTION OF THE INVENTION

The industrial thermoplastic adhesive applicator, object of this application for patent of invention, comprises a central heating and cooling control unit (1), on which there are disposed housings (2) for the hand-held applicators (3) with adhesive reservoir (3B), wherein the central heating and cooling control unit (1) is designed to receive at least one hand-held applicator (3), and may follow to two, three, four or more, all kept at rest. The heating and cooling control unit (1) is endowed with a display (4) for recording and evaluating the heating data, and also has a master electric switch (5) and signal (6).

The heating and cooling control unit (1) collects the thermal energy in the heated support (7), with thermal energy accumulator of the hand-held applicator (3), and cooling the cover of the body (8), by active cooling induced by air circulation (9).

The heating system of the hand-held applicator (3) is carried out by electromagnetic induction, electrical resistance (10) or others, depending on the application for which it is intended.

The hand-held applicator (3) is provided with an insulated knob body (11), which is separated from the internal heated area (12), from where there is projected a ferrule (13) which receives the applicator tip (14) *per se,* where the support (15) of the applicator tip (14) is threaded which may be cylindrical, spherical or otherwise that enables it to be rolled like a pen, to make the transfer of thermoplastic adhesive.

The hand-held applicator (3) contains a system of fins and inner ducts (16), with the purpose of thermal insulation and heating on the outer handling surface, or insulated knob body (11), induced by air circulation system (9).

One of the important characteristics of the invention refers to the fact that the system and technology of the thermal energy accumulator for portable thermoplastic adhesive applicator is cordless.

The adhesive applicator roll, or applicator tip (14), preferably has bipartite construction, comprising parts that are mirrored (17) and mounted on the adhesive transfer rolls (14A). These applicator tips (14) will comprise different designs, which obviously depend on the practical requirements.

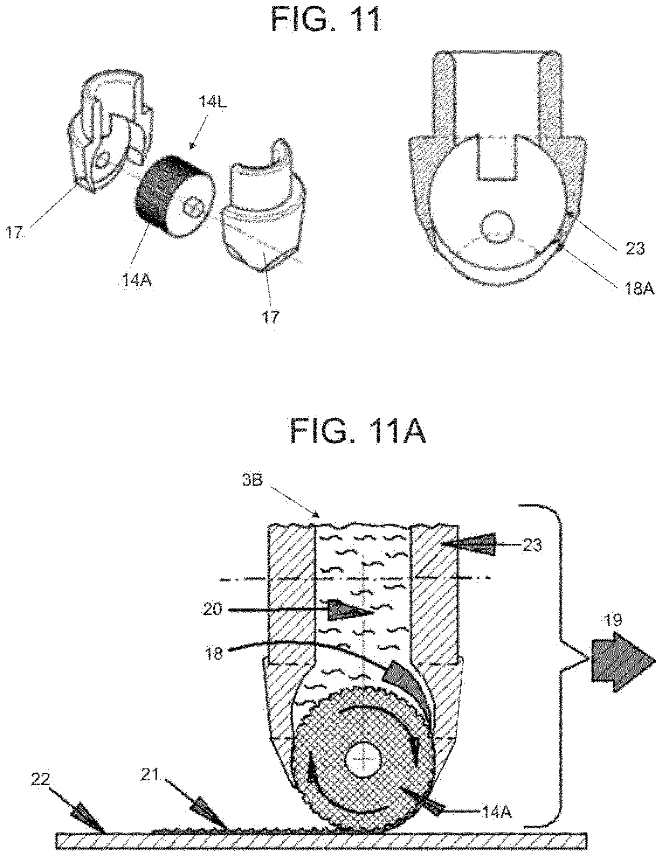

As shown in figures 11 and 11A, the design expressed in Fig. 11A depicts a three-dimensional wedge-shaped geometric form (18) located between the transfer roll (14A) and the roll support formed by the parts (17). The dynamic result of the elements, inside the nozzle, when in motion, in the respective direction (19) - Fig. 11A, added to the shape at the wedge-end (18A), results in the pumping or compression of adhesive (20) - Fig. 11A. This way, the compressed adhesive is induced and anchored on the surface of the transfer roll (14A), generating continuous and uniform application (21) - Fig. 11A, regardless of the speed of application handling.

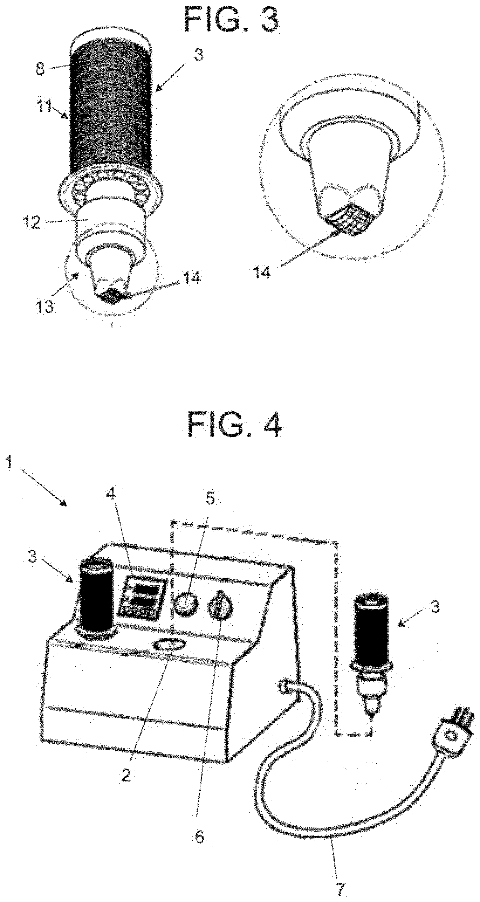

The region (22) - Fig. 11A depicts the containment area of the adhesive (20), where the size adjustment between the transfer roll (14A) Fig. 11 and the roll support (23) is minimal, so as to contain the flow of adhesive during the rest-time of the hand-held applicator (3) - Fig. 4 in the central heating control unit (1) - Fig. 4.

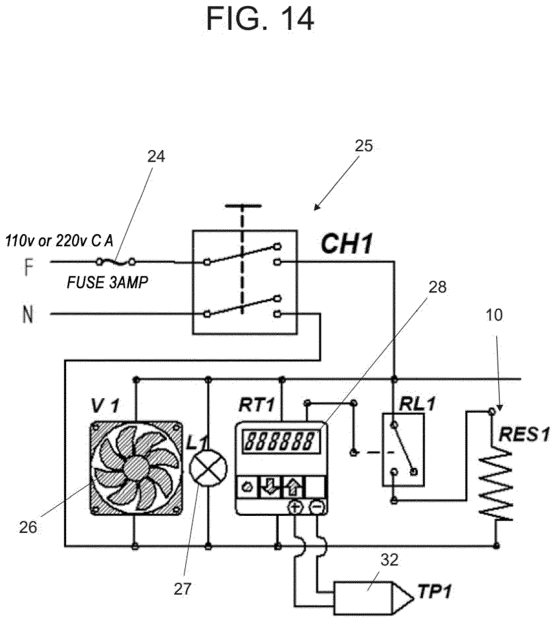

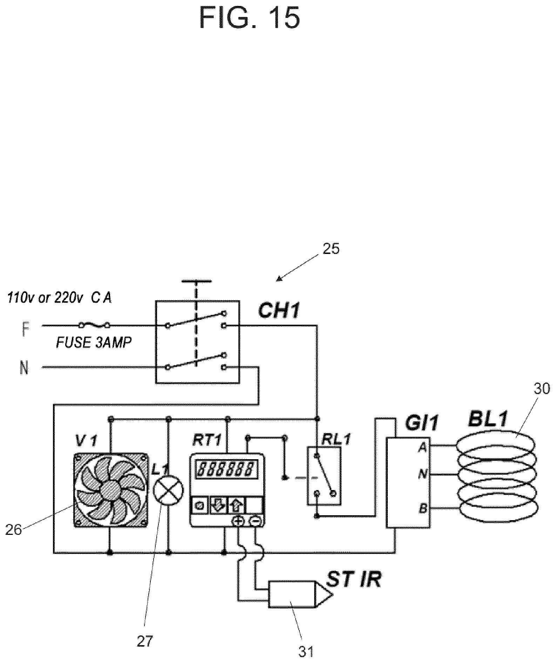

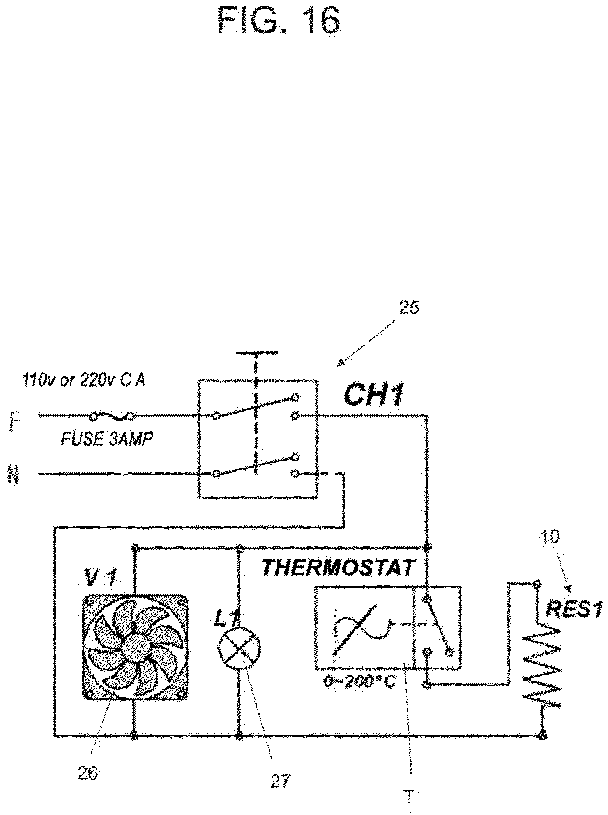

The hotmelt applicator pens can be heated through generating sources such as electrical resistance RES1 - Fig. 14 and Fig. 16, or electromagnetic inductance GI1 and L1 - Fig. 15 installed in the central heating control unit (1).

The heating control of these applicator nozzles can be performed by electronic temperature thermo-regulator RT1 - Figs. 14 and 16 with electronic temperature feedback sensor, such as PT100 or J-type thermocouple or the like TP1 (32) - Figs. 14 and 16 or infrared ST IR (31) - Fig. 15 and also by bi-metal thermo-regulator or with gas or thermostat-type temperature sensor (T) - Fig. 16.

The electronic circuitry of figures 14, 15 and 16, depict or symbolize the minimum requirement for protection and functionality resources, where the power uses a 3A fuse (24), master switch CG1 (25), ventilator V1 (26), signal lamp L1 (27), thermo-regulator RT1 (28) or thermostat (T) and in the case of electromagnetic inductance an inductor coil BL1 (30).

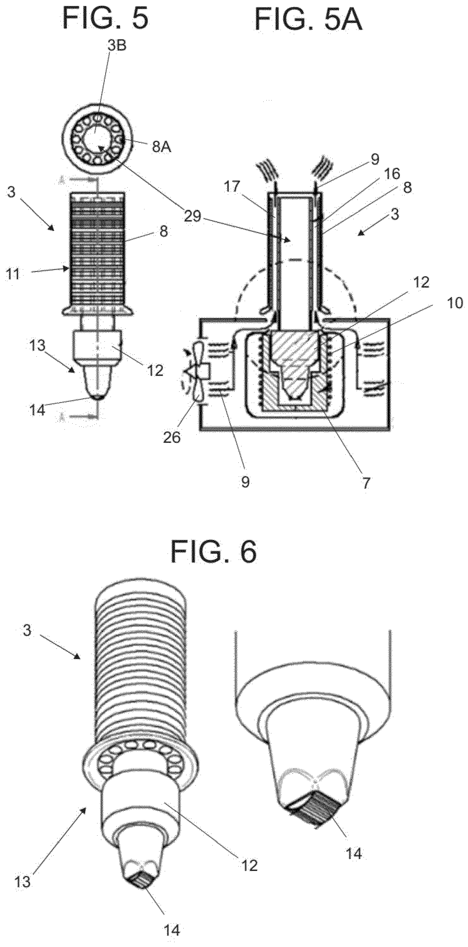

The applicator is heated in the central heating control unit (1), where the applicator (3) is at rest, collecting the thermal energy in the heated support (7) - Fig. 5, with thermal energy accumulator of the applicator (3), and cooling the cover (8) of the applicator body (3) by active cooling induced by air circulation (9) - Fig. 5.

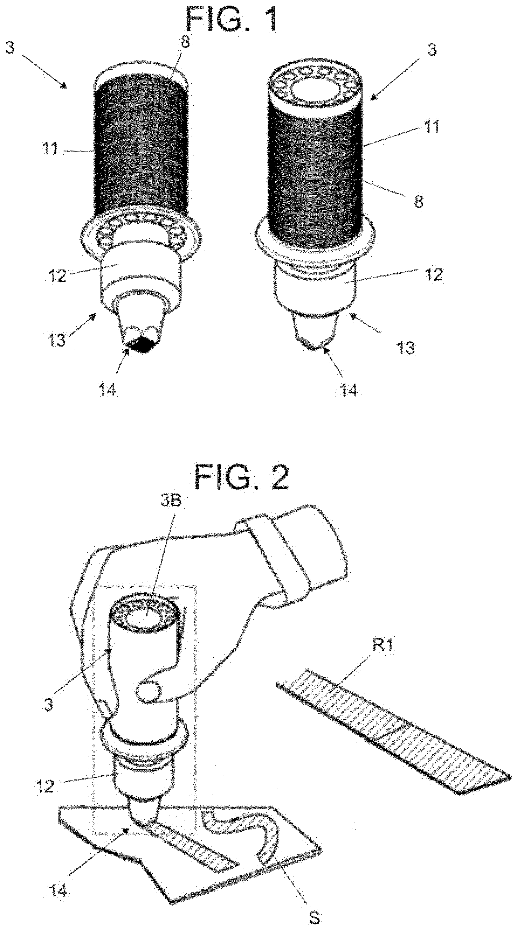

The thermoplastic adhesives used soften (liquefy), at temperatures over 100 degrees Celsius, according to the compound, and may reach temperatures close to 300 degrees Celsius, taking into account the physical characteristics of the products most used. Therefore, inside the applicator handle (3), the adhesive must reach these temperatures. As such, the central heating control unit (1) needs to generate this temperature and transmit to the applicator (3), which will retransmit to the adhesive, on its inside, in accordance with position (29) in Fig. 5. The applicator must also keep this heat on its inside, for a given period, equal to or greater than that required for the adhesive to be dispensed or applied, in accordance with Fig. 2.

At the same time, the outer surface of the portable, hand-held applicator handle (3) needs to be kept cooled during use, making human handling safe and comfortable. In order to maintain the heating of the thermal energy accumulator inside the hand-held applicator (3) and also the due cooling of the outer surface of the handle or cover (8) of the hand-held applicator (3), said cover (8) has been developed with a combination of thermal insulation material with longitudinal streaks (8A) Fig. 5.

According to the design of Fig. 5A, the air flow that cools the cover (8) of the hand-held applicator (3) when at rest does not affect the temperature in the adhesive reservoir of its inside, as this cover is made of low coefficient thermal conduction material.

Being free of electric wiring, handling in the application of the adhesive has a broad degree of freedom of movement and can be used in work performed on tabletops, on conveyor belts, product packaging lines or any other process that is compatible with thermoplastic adhesives (hotmelt).

The thermoplastic adhesives used in the portable applicator can be granulated, stick or sachets. The applicator was developed to apply thermally-activated adhesives by way of rotary nozzles, when applying on the surface of substrates to be bonded, such as leather, rubber, fabrics, synthetic laminates, paper and cardboard, wood, metal and the like.

The hand-held applicator (3) was designed to apply thermoplastic adhesive, in the form of a trail, with smooth design or texturized, being proportional to the design of the applicator nozzle or applicator tip (14). On the substrate that is to be bonded, the application can have a linear or curved design.

The resources and solutions in technology, safety and ergonomics of the product, suggests that it be used in industrial applications, but allows diverse generic use, such as household, school, laboratories etc., through optional exchangeable nozzles.

## Claims

1. An INDUSTRIAL THERMOPLASTIC ADHESIVE APPLICATOR, comprising a central heating and cooling control unit (1), on which there are disposed housings (2) for the hand-held applicators (3) with adhesive reservoir (3B), and the central heating and cooling control unit (1) is designed to receive at least one hand-held applicator (3), where they are kept at rest, each one with applicator tip (14) with wedge-end adhesive release device (18A), the control of the heating and cooling parameters being carried out electronically by way of electronic integration of the components.

2. The INDUSTRIAL THERMOPLASTIC ADHESIVE APPLICATOR according to claim 1, wherein the heating and cooling control unit (1) collects the thermal energy in the heated support (7), with thermal energy accumulator of the hand-held applicator (3), and cooling the cover of the body (8), by active cooling induced by air circulation (9).

3. The INDUSTRIAL THERMOPLASTIC ADHESIVE APPLICATOR according to claim 1, wherein the applicator tip (14) has a wedge-shaped three-dimensional form (18) located between the transfer roll (14A) and the roll support formed by the parts (17); therefore, the dynamic result of the elements, inside the nozzle, when in motion, in the respective direction (19), added to the shape at the wedge-end (18A), results in the pumping or compression of adhesive (20).

4. The INDUSTRIAL THERMOPLASTIC ADHESIVE APPLICATOR according to claim 1, wherein the heating system of the hand-held applicator (3) is made by resistance RES1 (10), or electromagnetic inductance GI1 and L1 installed in the central heating control unit (1).

5. The INDUSTRIAL THERMOPLASTIC ADHESIVE APPLICATOR according to claim 4, wherein the heating control of the applicator nozzles is carried out by electronic temperature thermo-regulator RT1 (28), with electronic temperature feedback sensor, such as PT100 or J-type thermocouple or the like TP1, or infrared ST IR and also by bi-metal thermo-regulator or with gas or thermostat-type temperature sensor (T).

6. The INDUSTRIAL THERMOPLASTIC ADHESIVE APPLICATOR according to claim 1, wherein the electronic circuitry symbolizes the minimum requirement for protection and functionality resources, where the power uses a 3A fuse (24), master switch CG1 (25), ventilator V1 (26), signal lamp L1 (27), thermo-regulator RT1 (28) or thermostat and in the case of electromagnetic inductance an inductor coil BL1 (30).

7. The INDUSTRIAL THERMOPLASTIC ADHESIVE APPLICATOR according to claim 1, wherein the hand-held applicator (3) is provided with an insulated knob body (11), which is separated from the inner heated area (12), from where there is projected a ferrule (13) which receives the applicator tip (14) *per se,* region where the support (15) of the applicator tip (14) is threaded, to make the transfer of thermoplastic adhesive.

8. The INDUSTRIAL THERMOPLASTIC ADHESIVE APPLICATOR according to claim 4, wherein the hand-held applicator (3) contains a system of fins and inner ducts (16), for thermal insulation and heating on the outer handling surface, or insulated knob body (11), induced by air circulation system (9).

9. The INDUSTRIAL THERMOPLASTIC ADHESIVE APPLICATOR according to any one of the preceding claims, wherein it is a thermal energy accumulator system for cordless portable thermoplastic adhesive applicator (3).
